# EUROPEAN PATENT SPECIFICATION

(11) **EP 1 300 238 B1**
(45) Date of publication and mention of the grant of the patent: **27.08.2014**
(21) Application number: 02019804.0
(22) Date of filing: 05.09.2002
(51) Int. Cl.: B32B 27/08, B32B 27/32, B65D 75/30

(54) **Multilayer packaging film and process**
Mehrschichtiger Verpackungsfilm und Herstellungsprozess
Film d'emballage multicouche et son procédé de fabrication

(30) Priority: 27.09.2001 EP 01122644
(43) Date of publication of application: 09.04.2003
(73) Proprietor: Flexopack S A, 19400 Koropi Attikis (GR)
(72) Inventor: Roussos, George, 194 00 Koropi (GR)
(74) Representative: Isarpatent

(56) References cited:
- WO-A-98/17469
- WO-A-98/34785
- WO-A-98/36903
- WO-A1-95/32094
- JP-A- H05 220 909
- US-A- 4 610 914

## Description

This invention relates to a multilayer film suitable for packaging food products, especially by a skin packaging process, usually a vacuum skin packaging process, especially for the packaging of food like processed meats such as bacon and ham, a process for skin packaging employing the films of the present invention and packed articles comprising the films of the present invention. Further, the present invention relates to a coextruded film for use in skin packaging applications, preferably vacuum skin packaging applications, comprising a cycloolefin copolymer.

In methods of skin packaging the packaging material generally comprises a top film (web) and a bottom film, which are each sent to the packaging station where they are sealed together to pack the product. The meat or other food to be packaged is placed onto the bottom web before the packaging station. The upper film comprises a film of a thermoplastic material, which is optionally preheated and then fed to the packaging station and over the product on the bottom film. There the top film is usually heated and thereby softened by contact with a heated member, for instance the inner surface of a "dome" which is then lowered over the food on the bottom film. The space between the top and bottom webs around the food is then evacuated and the top film is allowed to come into contact with the bottom film and with the food. The top film may be held against the dome for instance by vacuum pressure, which is released when it is desired to allow the top film to come into contact with the bottom film. Sealing of the top and bottom films is achieved by a combination of heat from the dome and pressure difference between the inside of the package and the outside atmosphere and can be aided by mechanical pressure and/or extra heating. Sealing bars may or may not be used. The heat that is supplied in the process is merely to allow the web to form and take up the form of the food product being packaged. This very well known process is generally called vacuum skin packaging (VSP).

It is important that films used in the skin packaging process are substantially non-heat shrinkable under temperatures like 180-200°C since, as will be obvious from the foregoing description of the process, a conventional heat shrinkable material, which is typically shrinkable by 60 to 80% in each direction, will shrink within the "dome" and will not be suitable for packaging. Substantially heat-shrinkable means that shrinkage at temperatures of about 180-200°C should be less than 25% in machine and transverse direction. In a heat shrink packaging process the shrinkable film is formed around an article to be packaged while being maintained at a temperature at which it does not shrink. After the package is sealed, optionally after being evacuated, the package is immersed in hot water or otherwise heated to shrink the film. The heat in the skin packaging process is in contrast to make the film sufficiently flexible that it conforms to the surface of the food when the vacuum is applied.

The skin packaging and development of the film and the process are further described in GB 1 307 054 and GB 1 404 417. In those specifications it is stated that the film used for the packaging may be a multilayer film but there is no specific disclosure of any such films.

In EP 243 510 there are described improved films for skin packaging in which the bulk layers are replaced by ethylene vinyl acetate copolymers, preferably having high vinyl acetate content. The bonding layer can be ionomer.

In GB 1 600 250 there are disclosed coextruded structures comprising a sealing layer of ionomer resin and in which one of the bulk layers is also formed of ionomer resin. The film before being stretched has a thickness of about 600microns but is not used for packaging in this form but is biaxially orientated to produce a film of 10 times the area having a thickness of around 60 microns. The stretched film is heat-shrinkable and is used in heat-shrink packaging processes.

In US 4 469 742 heat-shrinkable films are described which can have a sealing layer of ionomer. The structures before stretching have a thickness of 250 to 750 microns and after orientation have a thickness of 25 to 100 microns. The shrink capacity is about 30 to 55% in each direction at 85 °C. The sealing layer, which can be ionomer has a thickness of about 20% of the total laminate thickness.

The material used as the top film (web) should also be puncture resistant and highly formable at temperatures higher than its glass point. EP 343877 A2 teaches suitable materials for VSP comprising ionomer in the sealing layer. In EP 343 877 A2 a coextruded multilayer transparent thermoplastic film is substantially non-heat shrinkable at a temperature of 200 °C and comprises an inner sealing layer and an outer abuse layer and at least 25% of the thickness of the film comprises ionomer, the film being 50 to 250 microns thick. The films of EP 343 877 A2 request the use of at least 25% of the thickness of the film being ionomer which is very expensive and provides difficulties in processability because of the very tacky nature of ionomers.

In the prior art generally the sealing layer of the film comprises ionomer.

Furthermore, EP 968 817 teaches the use of cycloolefin copolymers for thermoforming applications. According also to TOPAS product line brochures (Thermoplastic olefin copolymers of amorphous structure, supplied by TICONA), cycloolefin copolymers are efficiently thermoformable due to their amorphous structure. Special attention is also given to the extremely low vapor penetration of cycloolefin copolymer films, which is generally desired in food packaging.

One structure disclosed in WO 98/17469 is ULDPE/ULDPE/EVOH/ULDPE/ULDPE. However, the film disclosed in this document is a heat shrinkable film which is not suitable for skin packaging processes. In more detail, WO 98/17469 is an application directed to shrink bags. For example, in paragraph 2 of this document it is indicated that "subsequently, the film is heated to initiate heat shrinkage about the meat". Furthermore, on page 18, the heat shrinkage percentages of the film of WO 98/17469 are indicated as being about 20-30% in 180°F (ca. 82°C). These are typical values for a shrink bag product. Furthermore, page 2, paragraphs 4 and 5 talk about oriented heat shrinkable films. The film of WO 98/17469 would fail in a vacuum skin packaging process.

Having a view to WO 98/36903, a large variety of possible multilayer films can be derived therefrom. However, the precise layer as claimed in the presenr invention cannot be derived from WO 98/36903. For example, layer c) of WO 98/36903 does not disclose a barrier layer comprising EVOH. Furthermore, the abuse layer is not disclosed as comprising HDPE and LDPE as a blend.

It is an object of the present invention to provide a multilayer film suitable for packaging, in particular skin packaging, with good mechanical properties, tensile properties low gas transmission and low heat shrinkability.

This object is solved by a multilayer film for packaging, comprising:
a. a sealing layer, comprising a blend of a low density polyethylene (LDPE) and a plastomer;
b. at least one bulk layer, comprising a plastomer
c. a barrier layer, comprising an ethylene vinyl alcohol polymer (EVOH);
d. an abuse layer, comprising a blend of a high density polyethylene (HDPE) and LDPE.
wherein the sealing layer is placed in contact with the article, the abuse layer being the outermost layer, the bulk layer is being located between the sealing layer and the abuse layer on one or both sides of the barrier layer.

The present invention further comprises the use of a multilayer film according to the present invention for skin packaging, preferably vacuum skin packaging of articles. Further, the present invention comprises a process for skin packaging an article, comprising:
a. placing the article on a support backing;
b. heating a top multilayer film according to the present invention to above the glass transition temperature of the components of the films;
c. applying the heated film over the article on the support backing; and
d. evacuating the space between the top multilayer film and the support backing to draw the film into sealing engagement with the support backing.

The present invention also comprises a packed article comprising a multilayer film according to the present invention.

### Detailed description

It has been found that films according to the present invention comprising plastomers in the sealing layer and bulk layer solve the above mentioned problems, have good thermoformability, high puncture resistance, a very high water vapor barrier, in particular when the film comprises a cycloolefin copolymer and very good processability at low costs. Further, the films have low heat shrinkability after irradiation which makes them particularly suitable for vacuum skin packaging applications.

The terms LDPE, HDPE, LLDPE, VLDPE, ULDPE, cycloolefin copolymers, plastomers, polyolefin elastomers and ionomers are known to the skilled person and are used in the present invention with their common meaning in the art:

LDPE is low density polyethylene specified in the art by densities of 0.915 - 0.940 g/ml. It is a highly branched polyethylene homopolymer typically produced by high pressure polymerization in tubular or autoclave reactors.

HDPE(High density polyethylene) is a semicrystalline polyethylene homopolymer having a density of 0.941 g/ml or greater, with a typical upper limit of 0.965. It can be produced by various processes like low pressure polymerization or using single site metallocene catalysts.

LLDPE (Linear low density polyethylene) are copolymers of ethylene and one or more alpha olefins, the alpha olefins typically having 3 to 20 , preferably 3 - 10 carbon atoms, e.g. 1-butene, 1-pentene, 1-hexene and/or 1-octene, with a density of about 0.915 to 0.940 g/ml. The molecular structure of conventional LLDPE is characterized by a linear polymer backbone with little or no long chain branching but with some short chain branching. Metallocene LLDPE products are included by the term in the present invention.

VLDPE(Very low density polyethylene) is a copolymer of ethylene and one or more alpha olefins the alpha olefins typically having 3 to 20, preferably 3 - 10 carbon atoms, e.g. 1-butene, 1-pentene, 1-hexene and/or 1-octene, with a density lower than 0.915 g/ml. For VLDPEs with density less than about 0.905, the term ULDPE (Ultra low density polyethylene) is also used.

By plastomers we specify ethylene and alpha olefin copolymers, the alpha olefins typically having 3 to 20 , preferably 3 - 10 carbon atoms, e.g. 1-butene, 1-pentene, 1-hexene and/or 1-octene, with a density less than 0.915 g/ml and typically more than 0.860 g/ml, preferably produced by a special metallocene or single site catalyst process. For a detailed discussion on the differences between ethylene-alpha olefin copolymer plastomers according to the present invention and other polymers like VLDPE and LLDPE, which are also alpha-olefin copolymers, it is referred to US Patent No. 5,283,128.

By polyolefin elastomers we mean two-component elastomer systems consisting of an elastomer (such as EPDM, i.e. ethylene-propylene-diene terpolymer) dispersed in a thermoplastic polyolefin (e.g. polyethylene, polypropylene). Furthermore, we include in this category metallocene-based ethylene copolymers with elastomeric properties like the product ENGAGE by DupontDow.

lonomers are thermoplastic copolymers of ethylene with carboxy group containg monomers such as methacrylic or acrylic acid and then partially neutralized with a metal ion.

By cycloolefin copolymers we mean copolymers of cyclic olefins and alpha olefins, preferably ethylene, as described in the patents US 5,218,049, US 5,854, 349, US 5,863,986, US 5,795,945, US 5,792,824, EP 0291208, EP 0283164, EP 0497567. Suitable cycloolefins for copolymerisation are monocyclic or multicyclic, preferably bicyclic cycloolefins, in which the rings preferably have 3 to 6 ring members. In multicyclic cycloolefins, preferably only one ring is a cycloolefinic ring whereas the other rings are cycloalkyl rings. The cycloolefin or cycloolefinic part of the multicycled cycloolefin is preferably a cyclo pentene or cyclohexene ring. Most preferably, the cycloolefin is norbornene. The alpha olefin may have from 2 to 20 carbon atoms or more, but ethylene and/or propylene are preferred. Preferred cyclic olefin copolymers are ethylene-norbornene copolymers marketed by TICONA under the name TOPAS.

The packaging film of the present invention comprises several types of layers with different composition and/or function.

The bulk layers contribute to the total strength of the film. The multilayer film for packaging according to the present invention comprises at least one bulk layer, comprising a plastomer. With "plastomers", polyolefin plastomers are meant for the purpose of the present invention. It is preferred that the bulk layer comprises said components as major component(s) or consists of said component(s). "As major components" means in the present invention that essentially no other components are present, except minor amounts of common additives or occasional impurities.

In one preferred embodiment the bulk layer(s) comprise(s) as the polymers a blend of a plastomer with ethylene-alkylacrylate copolymers, preferably having an alkyl moiety with 1 to 8 C atoms. Preferred ethylene-alkylacrylate copolymers are ethylene-methylacrylate (EMA), ethylene-ethylacrylate (EEA) and/or ethylene-butylacrylate (EBA). In a preferred embodiment the bulk layer comprises as polymers a blend of a plastomer with EMA.

In a preferred embodiment, the bulk layer comprises a blend of a plastomer with ethylene-alkylacrylate copolymers wherein the alkyl moiety has 1 to 8 C atoms, with polyethylene (PE) and/or with ethylene vinyl acetate (EVA). The term polyethylene comprises LDPE, HDPE, LLDPE, VLDPE, ULDPE, but LDPE is a preferred PE. The HDPE and/or LDPE are preferably made by the high pressure process. The Ziegler-Natta or the single-catalyst process are also suitable.

In a further preferred embodiment the bulk layer(s) further comprise(s) as the polymer(s) a cycloolefin copolymer, a blend of a cycloolefin copolymer with LLDPE, a blend of cycloolefin copolymer with VLDPE or a blend of a cycloolefin copolymer with polyolefin elastomers.

The bulk layer(s) add strength and the ability to elongate when heated. The bulk layer(s) according to the present invention provide(s) toughness and heat resistance to withstand the temperature and forces imposed during the vacuum forming operation. The bulk layer is located between the sealing layer and the outer abuse layer on one or on both sides of any barrier layer. It is preferred that the multilayer film according to the present invention comprises two bulk layers, one on each side of the barrier layer, wherein the first bulk layer may be the same or different from the second bulk layer.

It is preferred that the bulk layer(s) comprise(s) a blend of a plastomer and EVA. The plastomer in the bulk layer is preferably an ethylene alpha-olefin copolymer, more preferably a metallocene single-site catalysed ethylene alpha-olefin copolymer. For a detailed discussion on the differences between ethylene alpha-olefin copolymer plastomers according to the present invention and other polymers like VLDPE and LLDPE, which are also ethylene alpha-olefin copolymers, it is referred to US patent No. 5,283,128.

As regards the proportion of the components in the bulk layer(s), the plastomer is present in the bulk layer preferably in an amount of 50-100 weight percent, preferably about 60-90 weight percent, most preferably about 75 weight percent, i.e. about 72 - 80 weight percent. The balance are preferably ethylene-alkylacrylate copolymers wherein the alkyl moiety has 1 to 8 C atoms, polyethylene (PE) and/or ethylene vinyl acetate (EVA). Optionally common film additives may be present in the bulk layer as well.

It is preferred that, when EVA is present in the bulk layer in blend with the plastomer, the EVA is present in an amount of more than 0 weight percent, e.g. 0.1 weight percent to 50 weight percent, preferably 10-40 weight percent, more preferably 20-30 weight percent most preferably about 25 weight percent. The EVA used in the bulk layer has preferably a vinyl acetate content of 2-35 weight percent, also preferred 25-28 weight percent or 9-18 percent by weight.

In another preferred embodiment of the present invention, the bulk layer is entirely composed of EVA (100% EVA).

The sealing layer has the function of sealing to the support backing, base or bottom web material in the skin packaging process and make a leak proof seal. lonomers have been commonly used in the sealing layer and the sealing layer according to the present invention comprises a blend of a low density polyethylene (LDPE) and a plastomer. It is preferred that the sealing layer comprises said components as major component(s) or consists of said component(s).

A sealing layer comprising a blend of LDPE and a plastomer as main components was found to be preferred according to the present invention. The plastomer comprised in the sealing layer is preferably an ethylene alpha-olefin copolymer. The plastomers are preferably made with metallocene single-site catalyst systems ("metallocene single-site catalysed ethylene alpha-olefin copolymers"). The LDPE may be made by the high pressure process or the Ziegler-Natta or the single site catalyst process, but single site catalysed LDPE or HDPE are preferred. By using a blend of LDPE and plastomer in the sealing layer or as the sealing layer the comparably expensive ionomers can be reduced or avoided without a negative effect on the film properties.

Also, films comprising a cycloolefin copolymer in the sealing layer or films comprising a blend of plastomer and a cycloolefin copolymer have been found to be particularly preferred. Such films have high puncture resistance values and good tensile strength values. They also considerably reduce the costs compared with ionomer comprising films of the prior art.

In the sealing layer, the plastomer is preferably present in an amount of 10-80 percent by weight, preferably 20-40 percent by weight. The balance is preferably LDPE and optionally common film additives.

It was found that by the use of the materials or blends of materials of the bulk layer and sealing layer, in particular if a blend of LDPE and a plastomer is used for the sealing layer and a blend of a plastomer and EVA is used for the bulk layer, low heat shrinkability is achieved. In general, plastomers, when made in the blown film process do not have high shrinkability. The heat shrinkability can according to the present invention further be reduced by irradiation of the film. Irradiation of the film not only reduces the film shrink, but also bonds the individual layers more tightly and thus increases the melt strength of the film. Cycloolefinic copolymers in the sealing and/or bulk layers provide very high water vapor barrier properties which makes them particularly suitable for the skin packaging of food. Also, use of cycloolefin copolymers unexpectedly reduces the shrink of the film after irradiation. A suitable cycloolefin copolymer for the present invention is TOPAS 8007 (from TICONA; density 1.02 g/cc, MVR 2 according to ISO 1133).

A suitable LDPE according to the present invention is LACQTENE 1008 FE24 (from ATOFINA; density 0.924 g/cc, melt flow index (MFI) 0.8 (190°C/2.16)).

A suitable LLDPE according to the present invention is DOWLEX 5056 (from DOW; ethylene-octene copolymer, density 0.919 g/cc, MFI 1 (190°C/2.16)):

A suitable polyolefin plastomer according to the present invention is AFFINITY EG8100 (from DOW; density 0.870 g/cc, MFI 1 (190°C/2.16). Another suitable plastomer according to the present invention is AFFINITY PL 1880 (from DOW; ethylene octene copolymer, density 0.902 g/cc, MFI 1 (190°C/2.16)).

Further suitable representatives for components of the present invention are given in the examples.

The multilayer film for packaging according to the present invention also comprises or consists of a barrier layer comprising a vinylidene chloride homopolymer or copolymer such as polyvinyliden chloride (PVDC) and/or an ethylene vinyl alcohol polymer (EVOH). It is preferred that the barrier layer is EVOH. EVOH is a very good barrier against oxygen. The barrier layer is preferably an EVOH layer with 28-50 weight percent of ethylene, preferably about 38 percent by weight of ethylene. The EVOH in the barrier layer is preferably hydrolized to a degree of at least 50%. The barrier layer prevents the egress and, more importantly, the ingress of gases, such as oxygen that could otherwise damage the content of the packaged article by allowing oxidation. The barrier layer can comprise a vinylidene chlorine homopolymer or copolymer, although it is preferred for the barrier layer to comprise an ethylene-vinyl alcohol polymer (EVOH) or consist of EVOH, in particular when the film is irradiated during production. The EVOH polymer can be one of those conventionally used as a barrier layer in multilayer films. When the barrier layer is EVOH, its glass transition temperature is usually the highest of the film components and thus determines the minimum temperature to which the film should be heated to render it flexible during the skin packaging operation. The barrier layer is made of materials with low oxygen transmission, thus protecting the packed product from spoilage.

The multilyer films of the present invention may further comprise adhesive layers (tie layers). EVOH does not adhere well to other polymers. Therefore, adhesive layers (tie layers) are preferably used in combination with EVOH layers to bond the EVOH to the other layers. The tie materials are preferably chemically modified to improve the adhesion to EVOH. The multilayer film according to the present invention comprises preferably at least one adhesive layer in contact with the barrier layer. More preferably, the multilayer film of the present invention comprises two adhesive layers on both sides of and in contact with the barrier layer. The material used for the adhesive layer can be any of those known to be useful in adhering adjacent layers of coextruded films. Suitable adhesive materials are sold under the tradename Modic made by Mitsubishi. Preferred materials for the adhesive layer(s) are acidly modified ethylene-acrylic acid copolymers (EAA) acidly modified ethylene-ethyl acrylate copolymer(EEA), acidly modified VLDPE, acidly modified LLDPE, acidly modified polypropylene, acidly modified ionomer resins, ethylene vinyl acetate copolymers (EVA) and/or thermoplastic polyurethane elastomers. Adhesive or tie layers are generally used to aid adhesion of adjacent components. The adhesive layers can be of particular importance for adhering barrier layers to adjacent layers. In order to impart adhesion property to the barrier layer an adhesive layer is preferably provided between the barrier layer and the bulk layers. It is preferred that the tie layers comprise the above mentioned components as major component(s) or consist of said component(s).

Acids which may preferably used for acid modification include maleic acid, itaconic acid and anhydrides thereof, acrylic acid and/or methacrylic acid. Maleic acid modified LLDPE is particularly preferred according to the present invention.

An example for a suitable tie layer polymer according to the present invention is MODIC M533 (from MITSUBISHI; anhydrite modified LL-based tie resin (adhesive), density 0.92 g/cc, MFI 2.5 (190°C/2.16).

The multilayer films suitable for packaging according to the present invention also comprise an abuse layer, comprising one or more of the following components: a high density polyethylene (HDPE), a plastomer, a LDPE, a ionomer, a linear low density polyethylene (LLDPE) and a cycloolefin copolymer. Generally, the abuse layer is usually a higher melting point stiffer material that has high gloss to enhance the appearance of the final package. It is prefered that the above layer comprises said components as major component(s) or consists of said component(s).

Applicant has discovered that a blend of LDPE and HDPE is particularly preferred for the abuse layer. The HDPE and/or LDPE are preferably made by the high pressure process. The Ziegler-Natta or the single site-catalyst process are also suitable.

Also preferred is an abuse layer comprising as the main polymer components LLDPE or a blend of LLDPE with a cycloolefin copolymer.
The abuse layer comprises preferably 20-75 weight percent of LDPE, preferably 30-60 weight percent and 25-80 weight percent of HDPE, preferably 40-70 weight percent of HDPE.

It is particularly preferred that the multilayer film according to the present invention has the following sequential order of layers: sealing layer/bulk layer/adhesive layer/barrier layer/adhesive layer/bulk layer/abuse layer. However, films with different structures and other numbers of layers are also comprised by the present invention.

The film of the invention is preferably substantially non heat shrinkable at a temperature of 200° C and preferably should be substantially non-heat-shrinkable at a temperature of 85° C or 100° C or more, for instance 130° C. By substantially non-heat shrinkable we mean that when the film is heated to the specified temperature it shrinks by an amount of less than 30% preferably less than 25% of its dimension in each direction. The film can also be described as substantially non-oriented or as substantially dimensionally stable at the above specified temperatures. The temperature of 200° C is chosen for the assessment of heat shrinkability as that is the temperature of which the film is heated in the conventional skin packaging apparatus to render the film flexible during the packaging operation, although sometimes the film can be heated to even higher temperatures, for instance around 250° C.

The film is preferably 50-250 microns (µm) thick. Thinner films are generally insufficiently resistant to damage during packaging of bone-in meat cuts. It is unnecessary and expensive to use films thicker than 250 microns and in some instances such films can have worse abuse resistant properties than thinner films. Preferably the film is in the range 75 to 200 microns thick, more preferably 90 to 130 or 90 to 150 microns thick.

The abuse layer may preferably comprise about 3-25%, more preferably 10-20%, of the total thickness of the film for instance being 5 to 25, usually 15 to 20 microns thick.
The sealing layer may preferably comprise 10 to 35% of the total thickness, more preferred 15-30%.

The barrier layer has preferably a thickness of 2-20% of the total film thickness, preferably in the range of 4-15%.

The relative thickness of the adhesive layers is preferably 3-10% of the total thickness of the multilayer film, more preferably 4-8%. The adhesive layers are generally at least 2 microns and up to 10 microns thick, best adhesion being achieved with about 3 to 8 microns thickness.

Bulk layers preferably comprise 20-50% of the total thickness of the film, preferably 30-50% or more preferably 40-50% of the total thickness of the film. The bulk material is preferably provided on both sides of any barrier layer.

The films of the invention may preferably also include various additives that are commonly added to polymeric films in one or more layers. One such additive that is contemplated in the films of the invention is a slip agent to improve handling on the packaging machine. Other suitable additives are processing acids, antifog agents, cling agents, antiblocking agents, pigments, antioxidants, UV absorbers and mixtures thereof. Preferably, said additives are present in the multilayer film in an amount of less than 10 weight percent of the total film weight.

The film is preferably made by a conventional coextrusion process, using a suitable die, and may be extruded as a tube from a die having sufficient flow passages for all of the components.

Preferably the film according to the present invention, either in whole or in part, is irradiated for instance with ionizing radiation of about 2 to 20 MRad, preferably 5 to 16 MRad. The irradiation results in cross-linking of the components of the films, this resulting in improved strength and improved formability, as well as better adhesion between layers. The irradiation also reduces the film shrink properties making the films even more suitable for VSP applications.
This for example may be accomplished by irradiation using e.g. any electron beam generator operating in a range of about 150 kilovolts to about 6 megavolts with a power output capable of supplying the desired dosage. Many devices for irradiating films are known to those of skill in the art.

The process for skin packaging an article comprises placing the article on a support backing, heating a top thermoplastic film web to above the glass transition temperature of the components of the film, applying the heated film over the article on the support backing, and applying a differential pressure across the film to draw the film into sealing engagement with the support backing. The support backing may be in the form of a bottom web or film or may additionally comprise a bottom web or film with which the multilayer film of the present invention is sealed during the packaging process.

The process is particularly suitable for packaging food, in particular processed meat products, such as sliced bacon and ham and/or meat comprising bones.

The film is preferably a new film as described above, the film being arranged so that the bonding (sealing) layer is placed in contact with the article and the abuse layer is outermost.

The present invention is further described by the following examples which are not meant to restrict the protective scope of the present invention which is defined by the claims.

### Examples

The Tables 1, 2 and 3 show the film structures, physical properties and the polymers employed of four examples of the inventive films. All the films were irradiated to 5,8, and 10 MRads to improve the film properties and to reduce the film shrinkage.

All the examples have a sealing layer that is a blend of a plastomer and LDPE, a barrier layer of EVOH, with adhesive layers on each side of the barrier layer, and an abuse layer that is a blend of LDPE and HDPE. The bulk layers in each example are different, with example 1 having bulk layers of a blend of a first plastomer and LDPE, example 2 bulk layers of a blend of a second plastomer and LDPE, example 3 bulk layers of a blend of a second plastomer and a EVA, and example 4 bulk layers of a blend of a second plastomer and EMA. Example 5 is a film with bulk layers of 100% EVA. Further details on the film composition are described below and in Table 1.

Table 1 defines the thickness and composition of the individual layers.

Table 2 defines the polymers used.

Table 3 shows the physical properties measured for each of the inventive films compared to a commercial film. All the physical properties compare favorably with the commercial film and the film of example 1 was successfully tested on commercial vacuum skin packaging machine.

Experimental results of the examples are based on tests according to the following test methods unless noted otherwise.
Tensile Strength: ASTM D-882, method A
% Elongation: ASTM D-882, method A

MD refers to properties measured in the machine direction of the film, TD are the properties measured in the transverse direction.

Oxygen Gas Transmission Rate (O2-Tran): ASTM D-3985-81 at 23°C and 75% relative humidity

Water Vapor Transmission Rate (WVTR): ASTM F-1249-90 at 38°C and 90% relative humidity.

Shrinkage: Shrinkage values are obtained by measuring the shrink of the film after immersion in glycerin at 180°C for 1 minute. The shrinkage is measured in both the MD and TD direction.

**Table 1**

| **Formulations and Structure of the Test Films** | | | | | | | | | | | | | | | | | | |
|---|---|---|---|---|---|---|---|---|---|---|---|---|---|---|---|---|---|---|
| **Example** | **Seal A** | | **Bulk B** | | **Adh. C** | | **Barrier D** | | **Adh. E** | | **Bulk F** | | **Abuse F** | | | | | |
| | | u | | u | | u | | u | | U | | U | | u | | | | |
| 1 | P1 30% | 25 | PE 1 26% | 14 | A1 | 4 | B1 | 8 | A 1 | 4 | PE 1 26% | 25 | PE1 50% | 20 | | | | |
| | PE 1 70% | | P2 74% | | | | | | | | P2 74% | | PE2 50% | | | | | |
| 2 | P1 30% | 25 | PE 1 26% | 14 | A1 | 4 | B1 | 8 | A 1 | 4 | PE 1 26% | 25 | PE1 50% | 20 | | | | |
| | PE 1 70% | | P3 74% | | | | | | | | P3 74% | | PE2 50% | | | | | |
| 3 | P1 30% | 25 | E1 26% | 14 | A1 | 4 | B1 | 8 | A 1 | 4 | E1 26% | 25 | PE1 50% | 20 | | | | |
| | PE 1 70% | | P3 74% | | | | | | | | P3 74% | | PE2 50% | | | | | |
| 4 | P1 30% | 25 | EM1 26% | 14 | A1 | 4 | B1 | 8 | A 1 | 4 | EM1 26% | 25 | PE1 50% | 20 | | | | |
| | PE 1 70% | | P3 74% | | | | | | | | P3 74% | | PE2 50% | | | | | |
| 5 | P1 30% | 25 | E2 | 14 | A1 | 4 | B1 | 8 | A 1 | 4 | E2 | 25 | PE1 50% | 20 | | | | |
| | PE 1 70% | | | | | | | | | | | | PE2 50% | | | | | |
| | | | | | | | | | | | | | | | | | | |

| **Ex.** | **Seal A** | | **Bulk B** | | **Bulk C** | | **AdhD** | | **Barrier E** | | **Adh F** | | **Bulk G** | | **Bulk H** | | **Abuse I** | |
|---|---|---|---|---|---|---|---|---|---|---|---|---|---|---|---|---|---|---|
| | | u | | u | | u | | U | | u | U | | | u | | U | | u |
| Comp. Film | PE 3 | 6 | Y1 | 16 | Y2 | 14 | Tie | 4 | EVOH | 8 | Tie | 4 | X2 | 10 | X1 | 24 | PE4 | 9 |

u is the thickness in microns (µm)

The competitive film has 9 layers by analysis with a microscope. The film has been irradiated and the individual layers cannot be separated. As determined by IR spectography the composition of the film is:
PE3: LDPE
Y1, Y2, X1 and X2 all contain EVA with 18% VA and/or other polymers.
PE 4: HDPE and LDPE

Other polymers may be blended in the layers but they could not be defined.

**Table 2**

| **Polymer Properties** | | | | | | |
|---|---|---|---|---|---|---|
| **Type** | **Description** | **Manufacturer** | **Melt Index g/10min** | **Density g/cm³** | **Melting Point °C** | **Vicat Soft C** |
| E1 | EVA | Atofina Evatane 2805 28% VA | 7.0 | 0.95 | 72 | 41 |
| E2 | EVA | Dupont ELVAX3190 25% VA | 2 | 0.95 | 77 | 52 |
| EM1 | EMA | Atofina 29MA03 | 2-3.5 | 0.885 | 74 | 57 |
| P1 | Plastomer | Dow Affinity PL 1880 | 1.0 | 0.902 | 100 | 87 |
| P2 | Plastomer | Dow EG 8100 | 1.0 | 0.870 | 55 | 43 |
| P3 | Plastomer | Dow Affinity VP 8770 | 1.0 | 0.885 | 74 | 57 |
| A1 | Adhesive | Mitsubishi Modic M533 | 2.5 | 0.92 | 123 | 93 |
| PE 1 | LDPE | Atofina 1008 FE 24 | 0.8 | 0.924 | | 100 |
| PE2 | HDPE | Borealis FL 5580 | 1.2 | 0.958 | | |
| B1 | EVOH | Nippon Gohsei Soarnol ET 3803 38% ethylene | 3.2 | 1.17 | 173 | |

E1 is an ethylene vinyl acetate copolymer with a vinyl acetate content of 28%.
E2 is an ethylene vinyl acetate copolymer with a vinyl acetate content of 25%.
EM1 are ethylene-alkylacrylate copolymers wherein the alkyl moiety has 1 to 8 C atoms, in particular ethylene-methylacrylate (EMA), ethylene-ethylacrylate (EEA) and ethylene-butylacrylate (EBA). EMA was used in the examples.

P1, P2 and P3 are ethylene alpha-olefin copolymers manufactured with elastomeric properties and are often referred to as "ethylene alpha-olefin plastomers" The plastomers used in the examples are made with metallocene single-site catalyst systems.

A1: In order to impart adhesion property to the barrier layer adhesive layers are provided between the barrier layer and the bulk layers. In the examples a maleic acid modified LLDPE was used.

PE1 is a typical low density polyethylene made by the high pressure process and was used in the examples. Low density polyethylenes made by the Ziegler-Natta or the single-catalyst process could also be used.

PE2 is a typical high density polyethylene made by the high pressure process and was used in the examples. High density polyethylenes made by the Ziegler-Natta or the single-catalyst process could also be used.

B1 is an EVOH polymer that comprises hydrolyzed ethylene vinyl acetate copolymer, preferably hydrolyzed to a degree of at least 50. The mole% of vinyl acetate in the examples is 62%.

**Table 3**

| **Physical Properties of the Test Films** | | | | | | | | | | | | | | | |
|---|---|---|---|---|---|---|---|---|---|---|---|---|---|---|---|
| Description | Units | Example 1 | | | Example 2 | | | Example 3 | | | Example 4 | | | Example 5 | Commercial Film |
| Total Thickness | Microns | 100 | | | 100 | | | 100 | | | 100 | | | 100 | 96 |
| Radiation Dose | MRad | 5 | 8 | 10(1) | 5 | 8 | 10 | 5 | 8 | 10 | 5 | 8 | 10 | 10 | |
| 02-Tran 23°C,75% R.H. ASTM D3985-95 | cc/m²/24h/ 1atm | 2.4 | 2.5 | 3.1 | 2.6 | 2.4 | 2.5 | 2.6 | 3.1 | 3.1 | 2.4 | 2.6 | 2.7 | 3.4 | 3.2 |
| WVTR 38°C,90% R.H. ASTM F 1249-90 | g/m²/24h | 2.2 | 2.2 | 2.4 | 2.5 | 2.5 | 2.5 | 2.7 | 3 | 2.9 | 2.7 | 2.9 | 3 | 3.4 | 2.6 |
| Tensile Strength ASTM D-882 MD/TD | MPa | 20.9 | 20.6 | 20 | 21.8 | 21.9 | 23.5 | 21.7 | 21.9 | 22.4 | 20.5 | 20.2 | 20.6 | 26.9 | 29.6 |
| | | 16 | 16.9 | 17.3 | 18.5 | 20.5 | 20.8 | 18.1 | 20.3 | 19.8 | 15.9 | 17.9 | 18.5 | 23 | 22.1 |
| Elongation AT Break ASTM D-882 MD/TD | % | 390 | 371 | 374 | 384 | 381 | 405 | 404 | 388 | 420 | 367 | 375 | 390 | 430 | 388 |
| | | 398 | 423 | 450 | 428 | 478 | 465 | 466 | 460 | 477 | 388 | 460 | 472 | 470 | 393 |
| Shrinkage 180°C, 1 min , in glycerin MD/TD | % | 26.2 | 13.6 | 11.6 | 22.9 | 15.1 | 10.7 | 20.9 | 14.9 | 11.3 | 27.3 | 14 | 10.7 | 15.3 | 15.3 |
| | | -9.6 (2) | -5.8 | -3.1 | -10.0 | -5.3 | -3.3 | -4.9 | -3.3 | -2.0 | -7.1 | -5.8 | -2.7 | -5.7 | -7.3 |

| | | | | | | | | | | | | | | | |
|---|---|---|---|---|---|---|---|---|---|---|---|---|---|---|---|
| (1) Succesfully tested on a commercial vacuum skin packaging machine (2) Negative values mean negative shrinkage, i.e. elongation | | | | | | | | | | | | | | | |

2. In order to demonstrate further the advantages of cycloolefin copolymer containing films of the present invention, the physical properties of the film B (cycloolefin copolymer containing) were compared with those of film A, which does not contain cycloolefin copolymers. Film A has been tested successfully as a VSP forming film.
An increase in tensile strength and puncture resistance due to the presence of the cycloolefin copolymer (TOPAS 8007) was observed in film B.

Much better puncture resistance results are expected if cycloolefin copolymers are used in the sealing layer of the film.

**Table 4: Composition of Films A and B**

| | FILM A | FILM B |
|---|---|---|
| Abuse layer 29 microns | 80% 5056 + 20% 1008 | 80% 5056 + 20% 1008 |
| Bulk layer 32 microns | 74% EG8100 + 26% 1008 | 80% EG 8100 + 20% TOPAS 8007 |
| Tie layer 5 microns | M533 | M533 |
| Barrier layer 8 microns | EVOH 38% | EVOH 38% |
| Tie layer 5 microns | M533 | M533 |
| Bulk layer 18 microns | 74% EG8100 + 26% 1008 | 80% EG 8100 + 20% TOPAS 8007 |
| Sealing layer 34 microns | 70% 1008 + 30% PL 1880 | 70% 1008 + 30% PL 1880 |

### Used Polymers:

TOPAS 8007: Cycloolefin thermoplastic olefin copolymer of amorphous structure from TICONA; density 1.02 g/cc, MVR 2 according to ISO 1133.
LACQTENE 1008 FE24: LDPE from ATOFINA; density 0.924 g/cc, melt flow index (MFI) 0.8 (190°C/2.16).
DOWLEX 5056 (LLDPE from DOW; ethylene-octene copolymer, density 0.919 g/cc, MFI 1 (190°C/2.16).
AFFINITY EG8100 (Polyolefin plastomer from DOW; density 0.870 g/cc, MFI 1 (190°C/2.16).
AFFINITY PL 1880 (Polyolefin plastomer from DOW; ethylene octene copolymer, density 0.902 g/cc, MFI 1 (190°C/2.16).
MODIC M533 (from MITSUBISHI; anhydrite modified LL-based tie resin (adhesive), density 0.92 g/cc, MFI 2.5 (190°C/2.16).

**Table 5: Physical properties of films A and B**

| FILM TESTED | TENSILE STRENGTH | | ELONGATION AT BREAK (%) | | PUNCTURE RESISTANCE | |
|---|---|---|---|---|---|---|
| | (Mpa) MD | TD | MD | TD | FORCE (N) | ENERGY (mJ) |
| A | 19.1 | 16.6 | 390 | 400 | 18 | 80 |
| B | 22.9 | 20.7 | 360 | 450 | 21 | 100 |

## Claims

1. A low heat shrinkable multilayer blown film for packaging an article, comprising:
a. a sealing layer, comprising a blend of a low density polyethylene (LDPE) and a plastomer;
b. at least one bulk layer, comprising a plastomer;
c. a barrier layer, comprising an ethylene vinyl alcohol polymer (EVOH);
d. an abuse layer, comprising a blend of a high density polyethylene (HDPE), and LDPE;
wherein the sealing layer is placed in contact with the article, the abuse layer being the outermost layer, the bulk layer is being located between the sealing layer and the abuse layer on one or both sides of the barrier layer.

2. A multilayer film according to claim 1,
**characterized in that**
said bulk layer(s) comprise(s) a blend of a plastomer and ethylene-alkylacrylate copolymers.

3. A multilayer film according to claim 1 or 2,
**characterized in that**
said ethylene-alkylacrylate copolymers are ethylene-methylacrylate (EMA), ethylene-ethylacrylate (EEA) and/or ethylene-butylacrylate (EBA).

4. A multilayer film according to one or more of the preceding claims,
**characterized in that**
said bulk layer further comprises a blend of a cycoloolefin copolymer with LLDPE, a blend of a cycloolefin copolymer with VLDPE or a blend of a cycloolefin copolymer with polyolefin elastomers.

5. A multilayer film according to claim 1,
**characterized in that**
said bulk layer comprises a blend of a plastomer and EVA.

6. A multilayer film according to claim 1,
**characterized in that**
said bulk layer comprises a blend of a plastomer with ethylene-alkylacrylate copolymers wherein the alkyl moiety has 1 to 8 C atoms, a blend of a plastomer with a polyethylene (PE) and/or a blend of a plastomer with ethylene vinyl acetate (EVA).

7. A multilayer film according to one or more of the preceding claims,
**characterized in that**
said multilayer film comprises two bulk layers as defined in claim 1, one on each side of the barrier layer, wherein the first bulk layer may be the same or different from the second bulk layer.

8. A multilayer film according to one or more of the preceding claims,
**characterized in that**
said plastomer in the bulk layer is an ethylene α-olefin copolymer.

9. A multilayer film according to one or more of the preceding claims,
**characterized in that**
said plastomer in the bulk layer is a metallocene single site catalyzed ethylene α-olefin copolymer.

10. A multilayer film according to one or more of the preceding claims,
**characterized in that**
said plastomer is present in the bulk layer in an amount of 50 to 100 wt.-%, preferably 60 to 90 wt.-%, most preferably about 75 wt.-%.

11. A multilayer film according to one or more of claims 5-10,
**characterized in that**
said EVA is present in the bulk layer when blended with the plastomer in an amount of more than 0 wt.-% to 50 wt.-%, preferably 10-40 wt.-%, most preferably about 25 wt.-%.

12. A multilayer film according to one or more of claims 5-11,
**characterized in that**
said EVA in the bulk layer has a vinyl acetate content of 2 to 35 wt.-%, preferably 25-28 wt.-% or 9 to 18% by wt.

13. A multilayer film according to one or more of the preceding claims,
**characterized in that**
said plastomer in the sealing layer is an ethylene α-olefin copolymer.

14. A multilayer film according to one or more of the preceding claims,
**characterized in that**
said plastomer in the sealing layer is a metallocene single site catalyzed ethylene α-olefin copolymer.

15. A multilayer film according to one or more of the preceding claims,
**characterized in that**
said plastomer in the sealing layer is present in an amount of 10 to 80 % by wt., preferably 20 to 40 % by wt.

16. A multilayer film according to claim 1,
**characterized in that**
said sealing layer further comprises as polymer a cycloolefin copolymer.

17. A multilayer film according to one or more of the preceding claims,
**characterized in that**
said multilayer film comprises at least one adhesive layer in contact with the barrier layer.

18. A multilayer film according to one or more of the preceding claims,
**characterized in that**
said multilayer film comprises two adhesive layers on both sides of and in contact with the barrier layer.

19. A multilayer film according to one or more of the preceding claims,
**characterized in that**
said adhesive layer(s) comprise(s) acidly modified ethylene-acrylic acid copolymers (EAA), acidly modified ethylene-ethyl acrylate copolymer (EEA), acidly modified VLDPE, acidly modified LLDPE, acidly modified polypropylene, acidly modified ionomer resins, ethylene vinyl acetate copolymers (EVA) and/or thermoplastic polyurethane elastomers.

20. A multilayer film according to one or more of the preceding claims,
**characterized in that**
said abuse layer comprises 20 - 75 wt.-% of LDPE, preferably 30 - 60 wt.-% and 25 - 80 wt.-% of HDPE, preferably 40 - 70 wt.-%.

21. A multilayer film according to one or more of the preceding claims,
**characterized in that**
said barrier layer is an EVOH layer with 28 to 50 wt.-% of ethylene, preferably about 38 % by wt. of ethylene.

22. A multilayer film according to one or more of the preceding claims,
**characterized in that**
said EVOH in said barrier layer is hydrolyzed to a degree of at least 50%.

23. A multilayer film according to one or more of the preceding claims,
**characterized in that**
said multilayer film has the following sequential order of layers:
sealing layer/bulk layer/adhesive layer/barrier layer/adhesive layer/bulk layer/abuse layer.

24. A multilayer film according to one or more of the preceding claims,
**characterized in that**
said multilayer film has a thickness of 50 - 250 µm, preferably 75 - 200 µm, more preferably 90 - 150 µm, most preferred 90 - 130 µm.

25. A multilayer film according to one or more of the preceding claims,
**characterized in that**
the thickness of said abuse layer is 3 - 25% of the total thickness of the multilayer film, preferably 10 - 20 %.

26. A multilayer film according to one or more of the preceding claims,
**characterized in that**
the thickness of said sealing layer is 10 - 35% of the total thickness of the multilayer film, preferably 15 - 30 %.

27. A multilayer film according to one or more of the preceding claims,
**characterized in that**
the thickness of said barrier layer is 2 - 20 % of the total thickness of the multilayer film, preferably 4 - 15 %.

28. A multilayer film according to one or more of the preceding claims,
**characterized in that**
the thickness of said adhesive layer is 3 - 10 % of the total thickness of the multilayer film, preferably 4 - 8 %.

29. A multilayer film according to one or more of the preceding claims,
**characterized in that**
the thickness of said bulk layer is 20 - 50 % of the total thickness of the multilayer film, preferably 30 - 50 %, more preferably 40 - 50 %.

30. A multilayer film according to one or more of the preceding claims,
**characterized in that**
one or more layers of said multilayer film comprise common additives, such as slip agents, processing aids, antifog agents, cling agents, antiblocking agents, pigments, antioxidants, UV absorbers and mixtures thereof,

31. A multilayer film according to claim 28,
**characterized in that**
said additives are present in the multilayer film in an amount of less than 10 wt.-% of the total film weight.

32. A multilayer film according to one or more of the preceding claims,
**characterized in that**
said multilayer film is a coextruded film.

33. A multilayer film according to one or more of the preceding claims,
**characterized in that**
said multilayer film is irradiated with ionizing radiation of 2 to 20 MRad, preferably 5 to 16 MRad.

34. Use of a film according to one or more of the preceding claims for skin packaging, preferably vacuum skin packaging of articles.

35. Use according to claim 34 for packaging food.

36. Use according to claim 35 for packaging meat, processed meat products, such as sliced ham or bacon, sausages, meat comprising bones or hamburgers.

37. Process for skin packaging an article, comprising:
a. placing the article on a support backing;
b. heating a top multilayer film according to claim 1 to above the glass transition temperature of the components of the film;
c. applying the heated film over the article on the support backing; and
d. evacuating the space between the top multilayer film and the support backing to draw the film into sealing engagement with the support backing.

38. Packed article comprising a multilayer film according to claim 1.

## Patentansprüche

1. Bei geringer Wärme schrumpfbare, aus mehreren Schichten bestehende geblasene Folie zum Verpacken eines Gegenstandes, wobei die Folie Folgendes umfasst:
a. eine Versiegelungsschicht, die eine Mischung aus einem Polyethylen mit geringer Dichte (LDPE) und einem Plastomer enthält;
b. mindestens eine Volumenschicht, die ein Plastomer enthält;
c. eine Sperrschicht, die ein Ethylenvinylalkoholpolymer (EVOH) enthält;
d. eine Widerstandsschicht, die eine Mischung aus einem Polyethylen mit geringer Dichte (HDPE) und LDPE enthält;
wobei die Versiegelungsschicht in Kontakt mit dem Gegenstand gebracht wird, wobei die Widerstandsschicht die äußerste Schicht ist, wobei sich die Volumenschicht zwischen der Versiegelungsschicht und der Widerstandsschicht auf einer oder beiden Seiten der Sperrschicht befindet.

2. Mehrschichtfolie nach Anspruch 1, **dadurch gekennzeichnet, dass**
die Volumenschicht(en) eine Mischung aus einem Plastomer und Ethylenalkylacrylatcopolymeren enthält bzw. enthalten.

3. Mehrschichtfolie nach Anspruch 1 oder 2,
**dadurch gekennzeichnet, dass**
die Ethylenalkylacrylatcopolymere Ethylenmethylacrylat (EMA), Ethylenethylacrylat (EEA) und/oder Ethylenbutylacrylat (EBA) sind.

4. Mehrschichtfolie nach einem oder mehreren der vorangehenden Ansprüche,
**dadurch gekennzeichnet, dass**
die Volumenschicht des Weiteren eine Mischung aus einem Cycoloolefincopolymer mit LLDPE, eine Mischung aus einem Cycloolefincopolymer mit VLDPE oder eine Mischung aus einem Cycloolefincopolymer mit Polyolefinelastomeren enthält.

5. Mehrschichtfolie nach Anspruch 1,
**dadurch gekennzeichnet, dass**
die Volumenschicht eine Mischung aus einem Plastomer und EVA enthält.

6. Mehrschichtfolie nach Anspruch 1,
**dadurch gekennzeichnet, dass**
die Volumenschicht eine Mischung aus einem Plastomer mit Ethylenalkylacrylatcopolymeren, wobei die Alkylmoietät 1 bis 8 C-Atome aufweist, eine Mischung aus einem Plastomer mit einem Polyethylen (PE) und/oder eine Mischung aus einem Plastomer mit Ethylenvinylacetat (EVA) enthält.

7. Mehrschichtfolie nach einem oder mehreren der vorangehenden Ansprüche,
**dadurch gekennzeichnet, dass**
die Mehrschichtfolie zwei Volumenschichten nach Anspruch 1, eine auf jeder Seite der Sperrschicht, umfasst, wobei die erste Volumenschicht die gleiche wie die zweite Volumenschicht sein kann oder sich von der zweite Volumenschicht unterscheiden kann.

8. Mehrschichtfolie nach einem oder mehreren der vorangehenden Ansprüche,
**dadurch gekennzeichnet, dass**
das Plastomer in der Volumenschicht ein Ethylen-α-olefincopolymer ist.

9. Mehrschichtfolie nach einem oder mehreren der vorangehenden Ansprüche,
**dadurch gekennzeichnet, dass**
das Plastomer in der Volumenschicht ein Metallocen-Einzelstellen-katalysiertes Ethylen-α-olefincopolymer ist.

10. Mehrschichtfolie nach einem oder mehreren der vorangehenden Ansprüche,
**dadurch gekennzeichnet, dass**
das Plastomer in der Volumenschicht in einer Menge von 50 bis 100 Gewichts-%, bevorzugt 60 bis 90 Gewichts-%, ganz besonders bevorzugt etwa 75 Gewichts-% vorliegt.

11. Mehrschichtfolie nach einem oder mehreren der Ansprüche 5-10,
**dadurch gekennzeichnet, dass**
das EVA in der Volumenschicht nach dem Mischen mit dem Plastomer in einer Menge von mehr als 0 Gewichts-% bis 50 Gewichts-%, bevorzugt 10-40 Gewichts-%, ganz besonders bevorzugt etwa 25 Gewichts-% vorliegt.

12. Mehrschichtfolie nach einem oder mehreren der Ansprüche 5-11,
**dadurch gekennzeichnet, dass**
das EVA in der Volumenschicht einen Vinylacetatgehalt von 2 bis 35 Gewichts-%, bevorzugt 25-28 Gewichts-% oder 9 bis 18 Gewichts-% aufweist.

13. Mehrschichtfolie nach einem oder mehreren der vorangehenden Ansprüche,
**dadurch gekennzeichnet, dass**
das Plastomer in der Versiegelungsschicht ein Ethylen-α-olefincopolymer ist.

14. Mehrschichtfolie nach einem oder mehreren der vorangehenden Ansprüche,
**dadurch gekennzeichnet, dass**
das Plastomer in der Versiegelungsschicht ein Metallocen-Einzelstellen-katalysiertes Ethylen-α-olefincopolymer ist.

15. Mehrschichtfolie nach einem oder mehreren der vorangehenden Ansprüche,
**dadurch gekennzeichnet, dass**
das Plastomer in der Versiegelungsschicht in einer Menge von 10 bis 80 Gewichts-%, bevorzugt 20 bis 40 Gewichts-% vorliegt.

16. Mehrschichtfolie nach Anspruch 1,
**dadurch gekennzeichnet, dass**
die Versiegelungsschicht des Weiteren als Polymer ein Cycloolefincopolymer enthält.

17. Mehrschichtfolie nach einem oder mehreren der vorangehenden Ansprüche,
**dadurch gekennzeichnet, dass**
die Mehrschichtfolie mindestens eine Klebstoffschicht in Kontakt mit der Sperrschicht umfasst.

18. Mehrschichtfolie nach einem oder mehreren der vorangehenden Ansprüche,
**dadurch gekennzeichnet, dass**
die Mehrschichtfolie zwei Klebstoffschichten auf beiden Seiten der, und in Kontakt mit der, Sperrschicht umfasst.

19. Mehrschichtfolie nach einem oder mehreren der vorangehenden Ansprüche,
**dadurch gekennzeichnet, dass**
die Klebstoffschicht(en) azidisch modifizierte Ethylenacrylsäurecopolymere (EAA), azidisch modifiziertes Ethylenethylacrylatcopolymer (EEA), azidisch modifiziertes VLDPE, azidisch modifiziertes LLDPE, azidisch modifiziertes Polypropylen, azidisch modifizierte Ionomerharze, Ethylenvinylacetatcopolymere (EVA) und/oder thermoplastische Polyurethanelastomere enthält bzw. enthalten.

20. Mehrschichtfolie nach einem oder mehreren der vorangehenden Ansprüche,
**dadurch gekennzeichnet, dass**
die Widerstandsschicht 20-75 Gewichts-% LDPE, bevorzugt 30-60 Gewichts-% und 25-80 Gewichts-% HDPE, bevorzugt 40-70 Gewichts-% enthält.

21. Mehrschichtfolie nach einem oder mehreren der vorangehenden Ansprüche,
**dadurch gekennzeichnet, dass**
die Sperrschicht eine EVOH-Schicht mit 28 bis 50 Gewichts-% Ethylen, bevorzugt etwa 38 Gewichts-% Ethylen ist.

22. Mehrschichtfolie nach einem oder mehreren der vorangehenden Ansprüche,
**dadurch gekennzeichnet, dass**
die EVOH in der Sperrschicht auf einen Grad von mindestens 50 % hydrolysiert ist.

23. Mehrschichtfolie nach einem oder mehreren der vorangehenden Ansprüche,
**dadurch gekennzeichnet, dass**
die Mehrschichtfolie die folgende sequenzielle Reihenfolge von Schichten aufweist:
Versiegelungsschicht / Volumenschicht / Klebstoffschicht / Sperrschicht / Klebstoffschicht / Volumenschicht / Widerstandsschicht.

24. Mehrschichtfolie nach einem oder mehreren der vorangehenden Ansprüche,
**dadurch gekennzeichnet, dass**
die Mehrschichtfolie eine Dicke von 50-250 µm, bevorzugt 75-200 µm, besonders bevorzugt 90-150 µm, ganz besonders bevorzugt 90-130 µm aufweist.

25. Mehrschichtfolie nach einem oder mehreren der vorangehenden Ansprüche,
**dadurch gekennzeichnet, dass**
die Dicke der Widerstandsschicht 3-25 % der Gesamtdicke der Mehrschichtfolie, bevorzugt 10-20 % beträgt.

26. Mehrschichtfolie nach einem oder mehreren der vorangehenden Ansprüche,
**dadurch gekennzeichnet, dass**
die Dicke der Versiegelungsschicht 10-35 % der Gesamtdicke der Mehrschichtfolie, bevorzugt 15-30 % beträgt.

27. Mehrschichtfolie nach einem oder mehreren der vorangehenden Ansprüche,
**dadurch gekennzeichnet, dass**
die Dicke der Sperrschicht 2-20 % der Gesamtdicke der Mehrschichtfolie, bevorzugt 4-15 % beträgt.

28. Mehrschichtfolie nach einem oder mehreren der vorangehenden Ansprüche,
**dadurch gekennzeichnet, dass**
die Dicke der Klebstoffschicht 3-10 % der Gesamtdicke der Mehrschichtfolie, bevorzugt 4-8 % beträgt.

29. Mehrschichtfolie nach einem oder mehreren der vorangehenden Ansprüche,
**dadurch gekennzeichnet, dass**
die Dicke der Volumenschicht 20-50 % der Gesamtdicke der Mehrschichtfolie, bevorzugt 30-50 %, besonders bevorzugt 40-50 % beträgt.

30. Mehrschichtfolie nach einem oder mehreren der vorangehenden Ansprüche,
**dadurch gekennzeichnet, dass**
eine oder mehrere Schichten der Mehrschichtfolie gängige Additive enthalten, wie zum Beispiel Gleitmittel, Verarbeitungshilfsmittel, Antischleiermittel, Haftvermittler, Antihaftmittel, Pigmente, Antioxidanzien, UV-Absorbiermittel und Gemische davon.

31. Mehrschichtfolie nach Anspruch 28,
**dadurch gekennzeichnet, dass**
die Additive in der Mehrschichtfolie in einer Menge von weniger als 10 Gewichts-% des Foliengesamtgewichts vorliegen.

32. Mehrschichtfolie nach einem oder mehreren der vorangehenden Ansprüche,
**dadurch gekennzeichnet, dass**
die Mehrschichtfolie eine koextrudierte Folie ist.

33. Mehrschichtfolie nach einem oder mehreren der vorangehenden Ansprüche,
**dadurch gekennzeichnet, dass**
die Mehrschichtfolie mit ionisierender Strahlung von 2 bis 20 MRad, bevorzugt 5 bis 16 Mrad bestrahlt wird.

34. Verwendung einer Folie nach einem oder mehreren der vorangehenden Ansprüche zur Skinverpackung, bevorzugt Vakuum-Skinverpackung von Gegenständen.

35. Verwendung nach Anspruch 34 zum Verpacken von Lebensmitteln.

36. Verwendung nach Anspruch 35 zum Verpacken von Fleisch, verarbeiteten Fleischprodukten, wie zum Beispiel in Scheiben geschnittenem Schinken oder Speck, Würsten, Fleisch mit Knochen oder Hamburgern.

37. Verfahren zur Skinverpackung eines Gegenstandes, der Folgendes umfasst:
a. Anordnen des Gegenstandes auf einer Unterlage;
b. Erwärmen einer obersten Mehrschichtfolie nach Anspruch 1 auf oberhalb der Glasübergangstemperatur der Komponenten der Folie;
c. Legen der erwärmten Folie über den Gegenstand auf der Unterlage; und
d. Entleeren des Raumes zwischen der obersten Mehrschichtfolie und der Unterlage, um die Folie in einen abdichtenden Eingriff mit der Unterlage zu ziehen.

38. Verpackter Gegenstand, der eine Mehrschichtfolie nach Anspruch 1 umfasst.

## Revendications

1. Feuille soufflée multicouche thermorétractable à basse température pour l'emballage d'un article, comprenant :
a. une couche de scellement, comprenant un mélange de polyéthylène basse densité (PEBD) et d'un plastomère ;
b. au moins une couche de renfort, comprenant un plastomère
c. une couche barrière, comprenant un polymère éthylène-alcool vinylique (EVOH) ;
d. une couche d'usure, comprenant un mélange d'un polyéthylène haute densité (PEHD) et d'un PEBD,
dans laquelle la couche de scellement est placée en contact avec l'article, la couche d'usure étant la couche située le plus à l'extérieur, la couche de renfort étant située entre la couche de scellement et la couche extérieure, sur un côté ou sur les deux côtés de la couche barrière.

2. Feuille multicouche selon la revendication 1, **caractérisée en ce que** la ou les couches de renfort comprennent un mélange d'un plastomère et de copolymères éthylène-acrylate d'alkyle.

3. Feuille multicouche selon la revendication 1 ou 2, **caractérisée en ce que** lesdits copolymères éthylène-acrylate d'alkyle sont l'éthylène-acrylate de méthyle (EMA), l'éthylène-acrylate d'éthyle (EEA) et/ou l'éthylène-acrylate de butyle (EBA).

4. Feuille multicouche selon l'une ou plusieurs des revendications précédentes, **caractérisée en ce que** ladite couche de renfort comprend en outre un mélange d'un copolymère de cyclo-oléfine et de PEBD, un mélange d'un copolymère de cyclo-oléfine et de PETBD, ou un mélange d'un copolymère de cyclo-oléfine et d'élastomères polyoléfiniques.

5. Feuille multicouche selon la revendication 1, **caractérisée en ce que** ladite couche de renfort comprend un mélange d'un plastomère et d'EVA.

6. Feuille multicouche selon la revendication 1, **caractérisée en ce que** ladite couche de renfort comprend un mélange d'un plastomère et de copolymères éthylène-acrylate d'alkyle, le fragment alkyle ayant 1 à 8 atomes de carbone, un mélange d'un plastomère et d'un polyéthylène (PE) et/ou un mélange d'un plastomère et d'éthylène-acétate de vinyle (EVA).

7. Feuille multicouche selon l'une ou plusieurs des revendications précédentes, **caractérisée en ce que** ladite feuille multicouche comprend deux couches de renfort telles que définies dans la revendication 1, une sur chaque côté de la couche barrière, la première couche de renfort pouvant être identique à la deuxième couche de renfort ou différente de celle-ci.

8. Feuille multicouche selon l'une ou plusieurs des revendications précédentes, **caractérisée en ce que** ledit plastomère de la couche de renfort est un copolymère éthylène-α-oléfine.

9. Feuille multicouche selon l'une ou plusieurs des revendications précédentes, **caractérisée en ce que** ledit plastomère de la couche de renfort est un copolymère éthylène-α-oléfine catalysé par un catalyseur monosite de type métallocène.

10. Feuille multicouche selon l'une ou plusieurs des revendications précédentes, **caractérisée en ce que** ledit plastomère est présent dans la couche de renfort en une quantité de 50 à 100 % en poids, de préférence de 60 à 90 % en poids, tout spécialement d'environ 75 % en poids.

11. Feuille multicouche selon l'une ou plusieurs des revendications 5-10, **caractérisée en ce que** ledit EVA est présent dans la couche de renfort après mélange au plastomère en une quantité supérieure à 0 % en poids et allant jusqu'à 50 % en poids, de préférence de 10-40 % en poids, tout spécialement d'environ 25 % en poids.

12. Feuille multicouche selon l'une ou plusieurs des revendications 5-11, **caractérisée en ce que** ledit EVA de la couche de renfort a une teneur en acétate de vinyle de 2 à 35 % en poids, de préférence de 25-28 % en poids ou de 9 à 18 % en poids.

13. Feuille multicouche selon l'une ou plusieurs des revendications précédentes, **caractérisée en ce que** ledit plastomère de la couche de scellement est un copolymère éthylène-α-oléfine.

14. Feuille multicouche selon l'une ou plusieurs des revendications précédentes, **caractérisée en ce que** ledit plastomère de la couche de scellement est un copolymère éthylène-α-oléfine catalysé par un catalyseur monosite de type métallocène.

15. Feuille multicouche selon l'une ou plusieurs des revendications précédentes, **caractérisée en ce que** ledit plastomère de la couche de scellement est présent en une quantité de 10 à 80 % en poids, de préférence de 20 à 40 % en poids.

16. Feuille multicouche selon la revendication 1, **caractérisée en ce que** ladite couche de scellement comprend en outre en tant que polymère un copolymère de cyclo-oléfine.

17. Feuille multicouche selon l'une ou plusieurs des revendications précédentes, **caractérisée en ce que** ladite feuille multicouche comprend au moins une couche adhésive en contact avec la couche barrière.

18. Feuille multicouche selon l'une ou plusieurs des revendications précédentes, **caractérisée en ce que** ladite feuille multicouche comprend deux couches adhésives sur les deux côtés de la couche barrière et en contact avec celle-ci.

19. Feuille multicouche selon l'une ou plusieurs des revendications précédentes, **caractérisée en ce que** ladite ou lesdites couches adhésives comprennent des copolymères éthylène-acide acrylique (EAA) à modification acide, un copolymère éthylène-acrylate d'éthyle (EEA) à modification acide, un PETBD à modification acide, un PEBDL à modification acide, un polypropylène à modification acide, des résines ionomères à modification acide, des copolymères éthylène-acétate de vinyle (EVA) et/ou des élastomères de polyuréthanne thermoplastiques.

20. Feuille multicouche selon l'une ou plusieurs des revendications précédentes, **caractérisée en ce que** ladite couche extérieure comprend 20-75 % en poids de PEBD, de préférence 30-60 % en poids, et 25-80 % en poids de PEHD, de préférence 40-70 % en poids.

21. Feuille multicouche selon l'une ou plusieurs des revendications précédentes, **caractérisée en ce que** ladite couche barrière est une couche d'EVOH ayant 28 à 50 % en poids d'éthylène, de préférence environ 38 % en poids d'éthylène.

22. Feuille multicouche selon l'une ou plusieurs des revendications précédentes, **caractérisée en ce que** ledit EVOH de ladite couche barrière est hydrolysé à un degré d'au moins 50 %.

23. Feuille multicouche selon l'une ou plusieurs revendications précédentes, **caractérisée en ce que** ladite feuille multicouche comprend les couches dans l'ordre suivant :
couche de scellement/couche de renfort/couche adhésive/couche barrière/couche adhésive/couche de renfort/couche d'usure.

24. Feuille multicouche selon l'une ou plusieurs des revendications précédentes, **caractérisée en ce que** ladite feuille multicouche a une épaisseur de 50-250 µm, de préférence de 75-200 µm, plus particulièrement de 90-150 µm, tout spécialement de 90-130 µm.

25. Feuille multicouche selon l'une ou plusieurs des revendications précédentes, **caractérisée en ce que** l'épaisseur de ladite couche d'usure est de 3-25 % de l'épaisseur totale de la feuille multicouche, de préférence de 10-20 %.

26. Feuille multicouche selon l'une ou plusieurs des revendications précédentes, **caractérisée en ce que** l'épaisseur de ladite couche de scellement est de 10-35 % de l'épaisseur totale de la feuille multicouche, de préférence de 15-30 %.

27. Feuille multicouche selon l'une ou plusieurs des revendications précédentes, **caractérisée en ce que** l'épaisseur de ladite couche barrière est de 2-20 % de l'épaisseur totale de la feuille multicouche, de préférence de 4-15 %.

28. Feuille multicouche selon l'une ou plusieurs des revendications précédentes, **caractérisée en ce que** l'épaisseur de ladite couche adhésive est de 3-10 % de l'épaisseur totale de la feuille multicouche, de préférence de 4-8 %.

29. Feuille multicouche selon l'une ou plusieurs des revendications précédentes, **caractérisée en ce que** l'épaisseur de ladite couche de renfort est de 20-50 % de l'épaisseur totale de la feuille multicouche, de préférence de 30-50 %, plus particulièrement de 40-50 %.

30. Feuille multicouche selon l'une ou plusieurs des revendications précédentes, **caractérisée en ce qu'**une ou plusieurs couches de ladite feuille multicouche comprennent des additifs usuels tels que des agents anti-glissement, des auxiliaires de mise en oeuvre, des agents antivoile, des agents d'adhésivité, des agents anti-adhérence de contact, des pigments, des antioxydants, des agents absorbant les UV et des mélanges de ceux-ci.

31. Feuille multicouche selon la revendication 28, **caractérisée en ce que** lesdits additifs sont présents dans la feuille multicouche en une quantité inférieure à 10 % en poids du poids total de la feuille.

32. Feuille multicouche selon l'une ou plusieurs des revendications précédentes, **caractérisée en ce que** ladite feuille multicouche est une feuille co-extrudée.

33. Feuille multicouche selon l'une ou plusieurs des revendications précédentes, **caractérisée en ce que** ladite feuille multicouche est exposée à un rayonnement ionisant de 2 à 20 Mrad, de préférence de 5 à 16 Mrad.

34. Utilisation d'une feuille selon l'une ou plusieurs des revendications précédentes pour le pelliplacage, de préférence pour le pelliplacage sous vide d'articles.

35. Utilisation selon la revendication 34 pour emballer des produits alimentaires.

36. Utilisation selon la revendication 35 pour emballer de la viande, des produits de viande transformée tels que du jambon ou du bacon en tranches, des saucisses, de la viande comprenant des os, ou des hamburgers.

37. Procédé de pelliplacage d'un article, comprenant
a. la mise en place de l'article sur un papier dorsal ;
b. le chauffage d'une feuille multicouche supérieure selon la revendication 1 jusqu'à une température supérieure à la température de transition vitreuse des constituants de la feuille ;
c. l'application de la feuille chauffée par-dessus l'article sur le papier dorsal ; et
d. le fait de faire le vide dans l'espace entre la feuille multicouche supérieure et le papier dorsal, pour tirer le film de façon qu'il soit en prise par scellement avec le papier dorsal.

38. Article emballé comprenant une feuille multicouche selon la revendication 1.
